# EUROPÄISCHE PATENTSCHRIFT

(11) **EP 3 484 654 B1**
(45) Veröffentlichungstag und Bekanntmachung des Hinweises auf die Patenterteilung: **25.12.2024**
(21) Anmeldenummer: 17729081.4
(22) Anmeldetag: 06.06.2017
(51) Int. Cl.: B23K 10/02, B23K 26/342, B23K 26/142, B23K 26/352, B23K 9/04, B23K 26/10, B23K 101/00

(54) **VERFAHREN ZUR OBERFLÄCHENBEARBEITUNG, VERFAHREN ZUR HERSTELLUNG EINES MOTORBLOCKES, VORRICHTUNG ZUR OBERFLÄCHENBEARBEITUNG**
METHOD FOR SURFACE MACHINING, METHOD FOR PRODUCING AN ENGINE BLOCK, DEVICE FOR SURFACE MACHINING
PROCÉDÉ DE TRAITEMENT DE SURFACE, PROCÉDÉ DE FABRICATION D'UN BLOC-MOTEUR, DISPOSITIF DE TRAITEMENT DE SURFACE

(30) Priorität: 18.07.2016 DE 102016213075
(43) Veröffentlichungstag der Anmeldung: 22.05.2019
(73) Patentinhaber: Volkswagen Aktiengesellschaft, 38440 Wolfsburg (DE)
(72) Erfinder: MÜLLER, Philipp Marian, 38106 Braunschweig (DE); KLIMEK, Klaus Stefan, 37120 Bovenden (DE); HIRSCHFELDT, Mike, 38124 Brauschweig (DE); RICHTER, Stefan, 38531 Rötgesbüttel (DE)
(86) Internationale Anmeldenummer: PCT/EP2017/063641
(87) Internationale Veröffentlichungsnummer: WO 2018/015063

(56) Entgegenhaltungen:
- EP-A2- 2 799 180
- DE-A1- 10 064 440
- DE-A1- 102008 001 908
- DE-A1- 102008 015 403
- US-A1- 2012 100 313
- GÉRHARD BARBEZAT ET AL: "Durchbruch für die Motorenbeschichtung", SULZER TECHNICAL REVIEW 2/2001, 28 February 2001 (2001-02-28), pages 8 - 11, XP055399508, Retrieved from the Internet <URL:https://www.sulzer.com/de/-/media/Documents/Cross_Division/STR/2001/2001_02_8_barbezat_e.pdf> [retrieved on 20170817]

## Beschreibung

Die Erfindung betrifft eine Vorrichtung zur Oberflächenbearbeitung eines Hohlraums, ein Verfahren zur Oberflächenbearbeitung eines Hohlraumes, insbesondere einer Kolbenlaufbahn eines Zylinders eines Verbrennungsmotorblockes, ein Verfahren zur Herstellung eines Motorblockes eines Verbrennungsmotors sowie ein Kraftfahrzeug, insbesondere einen Personenkraftwagen.

Bei der Herstellung von Kolbenlaufbahnen von Zylindern in Motorblöcken von Verbrennungsmotoren werden diese typischerweise strukturiert. Dies kann als vorbereitender Schritt für ein thermisches Beschichten ausgeführt werden. Als Verfahren zum Strukturieren der Oberfläche können abtragende Verfahren, beispielsweise mit Laserstrahlung, angewandt werden.

Bei abtragenden Verfahren zur Oberflächenbearbeitung fällt abgetragenes Material typischerweise als Feststoffpartikel, als Flüssigkeitströpfchen oder gasförmig bzw. als Dampf an. Diese sollen im Sinne eines effizienten und störungsfreien Verfahrens rasch vom Ort des Abtrags abtransportiert werden. Zu diesem Zweck bietet sich in vielen Fällen ein Absaugen an. Hierbei wird mittels eines Unterdrucks ein Gasstrom, beispielsweise ein Luftstrom, erzeugt, welcher geeignet ist, die Partikel mit sich zu führen und vom Ort des Abtrags abzutransportieren. Dazu muss eine ausreichende Luftgeschwindigkeit erreicht werden, um die Partikel, die typischerweise aus Metall bzw. Metalloxid bestehen, im Luftstrom zu halten. Anschließend kann eine Reinigung des Luftstroms, beispielsweise durch ein Filtrationsverfahren, erfolgen.

In bekannten Verfahren werden durch Absaugen sehr große Luftströme erzeugt, die eine groß dimensionierte Unterdruckquelle und damit hohe Investitionskosten mit sich bringen. Weiterhin ist der energetische Aufwand groß, was hohe Betriebskosten mit sich bringt. Auch sind die benötigten Einrichtungen zur Reinigung des Luftstroms entsprechend groß zu dimensionieren.

EP 2 799 180 A2 lehrt ein Verfahren und eine Vorrichtung zur Oberflächenstrukturierung eines Maschinenelementes, bei dem in einem oberflächennahen Bereich mittels einer elektromagnetischen Strahlung Strukturen auf einer Oberfläche erzeugt werden. Dabei wird ein Reflektorelement in einem Schutzrohr in einen Hohlraum eingeführt, so dass mittels eines Lasers und Reflektion des Lasers die Oberfläche strukturierbar ist. Dabei entstehende Gase oder auch Partikel können mit einer Absaugung abgeführt werden, wobei zu diesem Zweck eine Gasströmung entlang des Schutzrohres an dessen Außenseite erzeugt wird und auf der dem Schutzrohr gegenüberliegende Seite des Hohlraumes aus diesen abgezogen wird.

Der DE 100 64 440 A1 ist ein Verfahren und eine Vorrichtung zur Bearbeitung einer Innenfläche einer zylinderförmigen Bohrung eines Bauteils entnehmbar, bei dem ebenfalls mittels eines Reflektors ein Laserstrahl auf die Innenfläche der zylinderförmigen Bohrung gelenkt wird. Eine Absaugung wird hier derart vorgenommen, dass ein Absaugrohr bereitgestellt wird, dessen Öffnung in der Nähe des Auftreffpunktes des Laserstrahles auf der zu bearbeitenden Oberfläche positioniert ist. Durch Erzeugung eines Unterdruckes werden Gase bzw. Partikel durch dieses Absaugrohr von der Bearbeitungsstelle entfernt. Die DE 101 18 291 A1 offenbart eine Vorrichtung zum Laser-Belichten einer Fläche von metallischen Werkstücken, mit einem Umlenkspiegel und mit einer Laserstrahlquelle, die einen auf den Umlenkspiegel und mit einer Laserstrahlquelle , die einen auf den Umlenkspiegel gerichteten und an der Reflektionsfläche des Umlenkspiegels umgelenkten Laserstrahl abgibt.

Aus der US 2012/100313 A1 ist eine Vorrichtung zur Oberflächenbearbeitung eines Hohlraums bekannt, umfassend ein im Wesentlichen hohlstabförmiges Bearbeitungswerkzeug mit einem Reflektor sowie eine Laserstrahlquelle und eine Absauganlage, die dichtend an einer Öffnung eines Hohlraums ansetzbar ist.

Der Erfindung liegt die Aufgabe zugrunde, ein Verfahren zur Oberflächenbearbeitung, ein Verfahren zur Herstellung eines Motorblockes und eine Vorrichtung zur Oberflächenbearbeitung zur Verfügung zu stellen, mit denen in einfacher, kostengünstiger und effizienter Weise Spülgas zugeführt sowie abgetragenes Material abtransportiert werden kann.

Zur Lösung der Aufgabe werden eine Vorrichtung zur Oberflächenbearbeitung eines Hohlraums gemäß Anspruch 1, ein Verfahren zur Oberflächenbearbeitung eines Hohlraumes, insbesondere einer Kolbenlaufbahn eines Zylinders eines Verbrennungsmotorblockes gemäß Anspruch 4 und ein Verfahren zur Herstellung eines Motorblockes eines Verbrennungsmotors gemäß Anspruch 9, zur Verfügung gestellt. Vorteilhafte Ausgestaltungen der Vorrichtung zur Oberflächenbearbeitung sind in den Unteransprüchen 2 und 3 angegeben, vorteilhafte Ausgestaltungen des Verfahrens zur Oberflächenbehandlung sind in den Unteransprüchen 5-8 angegeben.

Ein Aspekt der Erfindung ist eine Vorrichtung zur Oberflächenbearbeitung eines Hohlraums. Diese umfasst ein im Wesentlichen hohlstabförmiges Bearbeitungswerkzeug mit einem Reflektor sowie eine Laserstrahlquelle und eine Absauganlage, die dichtend an eine Seite eines Hohlraums, insbesondere eines Zylinders eines Verbrennungsmotorblockes, ansetzbar ist. Die Vorrichtung ist derart eingerichtet, dass das Spülgas an der Öffnung des Hohlraums abziehbar ist, zu der es zuvor, durch den Innenraum des Bearbeitungswerkzeugs eingeleitet wurde.

Das Bearbeitungswerkzeug ist vorzugsweise genau hohlstabförmig ausgestaltet. Die Laserstrahlquelle kann optische Elemente, wie beispielsweise einen Kollimator, umfassen.

Der Reflektor, auch als Umlenkprisma oder Spiegel bezeichnet, dient insbesondere zum Umlenken des Laserstrahls, welcher entlang der Längsachse des Bearbeitungswerkzeugs durch dieses geführt und anschließend in Richtung der Oberfläche des Hohlraums reflektiert wird. Typischerweise ist der Reflektor im Bearbeitungswerkzeug an der Seite angeordnet, die zum Einfahren in den Hohlraum ausgestaltet ist. Der Laserstrahl verlässt das Bearbeitungswerkzeug durch einen insbesondere seitlich liegenden Auslass.

Ein Spülgasstrom ist dazu ausgestaltet, den Reflektor vor Verunreinigungen zu schützen sowie zum Abtransport der abgetragenen Partikel beizutragen. Insbesondere ist mindestens ein Auslass am Bearbeitungswerkzeug angeordnet, um den Austritt des Spülgasstroms zu ermöglichen. Diese kann auch die Austrittsöffnung des Lasers sein. Sich lösende Verschmutzungen am Reflektor können mit dem Gas- bzw. Gasgemischstrom abtransportiert werden.

Die Absauganlage umfasst insbesondere eine Absaugmanschette, auch Absaugtopf genannt, die geeignet ist, auf die Oberfläche des den Hohlraum enthaltenden Werkstücks angelegt zu werden. Weiterhin umfasst die Absauganlage dichtende Elemente, wenigstens einen Schlauch sowie eine Unterdruckquelle.

Die Absauganlage ist direkt oder indirekt an der Führungsvorrichtung angeordnet. Im Falle einer indirekten Anordnung können Zwischenelemente angeordnet sein. Dies können beispielsweise Elemente sein, die einen Winkelausgleich zwischen Führungsvorrichtung und Absauganlage ermöglichen.

Vorteil dieser erfindungsgemäßen Vorrichtung ist, dass damit das effiziente erfindungsgemäße Verfahren durchgeführt werden kann, mit dem signifikante Einsparungen von Investitions- und laufenden Kosten möglich sind.

In einer Ausgestaltung weist die Vorrichtung zur Oberflächenbearbeitung eine Unterdruckerzeugungseinrichtung auf.

Dies kann eine Unterdruckpumpe bzw. Vakuumpumpe sein. Insbesondere ist auch eine Einrichtung zur Aufbereitung oder Reinigung der Abluft angeordnet oder anordbar, beispielsweise mittels eines Luftfilters. Diese kann auch Teil der Vorrichtung sein.

In einer weiteren Ausgestaltung der Vorrichtung weist die Absauganlage ein flexibles Element, insbesondere eine Absaugmanschette auf, das geeignet ist, eine Dichtungswirkung zu der Oberfläche des den Hohlraum ausbildenden Materials, in dem die Öffnung ausgebildet ist, herzustellen.

Die Manschette kann aus flexiblem Material ausgeführt sein, um sich beim Andrücken an die Oberfläche, beispielsweise des Motorblockes, zu verformen und derart Dichtigkeit zu erreichen. Alternativ ist eine starre Manschette möglich, die mittels Schwerkraft oder eines Anpressdrucks an die Oberfläche angedrückt wird. Diese kann weiterhin eine Dichtung aufweisen.

Vorteil dieser Ausgestaltung ist, dass das flexible Element, die Absaugmanschette, exakt an die Öffnung, wie beispielsweise an die Öffnung des Zylinders eines Zylinderblocks, angepasst sein kann, um schnell und effektiv eine dichte Verbindung herzustellen. Die Dichtwirkung wird durch den anliegenden Unterdruck während des Absaugens noch erhöht.

Ein weiterer Aspekt der Erfindung ist ein Verfahren zur Oberflächenbearbeitung eines Hohlraums, insbesondere einer Kolbenlaufbahn eines Zylinders eines Verbrennungsmotorblockes, bei dem ein Hohlraum bereitgestellt wird und eine beschriebene Vorrichtung zur Oberflächenbearbeitung eines Hohlraums zur Verfügung gestellt wird. Es wird ein Bearbeitungswerkzeug in den Hohlraum eingefahren und mit dem Bearbeitungswerkzeug wird die Oberfläche des Hohlraums bearbeitet. Weiterhin wird ein Spülgas in den Hohlraum eingeleitet und an einer Öffnung des Hohlraums an diesen eine Absauganlage angeschlossen, um Spülgas sowie bei der Bearbeitung gegebenenfalls entstandene Partikel abzusaugen.

Im Allgemeinen sind mit Hohlraum gerade kreiszylinderförmige Hohlräume gemeint. Insbesondere sind die zylindrischen Hohlräume beidseitig offene Zylinder eines Verbrennungsmotorblockes. Es ist allerdings nicht auszuschließen, dass ein Sackloch oder ein anders geformter Hohlraum, beispielsweise ein allgemeiner Zylinder mit eckiger oder unregelmäßiger Grundfläche, mit dem erfindungsgemäßen Verfahren bearbeitet wird.

Das Bearbeitungswerkzeug, auch Innenbearbeitungskopf genannt, kann an einer Führungsvorrichtung, zum Beispiel einer Führungsschiene, in Richtung einer Längsachse des Zylinders führbar sein. Diese Längsachse verläuft insbesondere durch den Schwerpunkt der Fläche, zum Beispiel der Kreisfläche, die den Zylinder definiert.

Insbesondere ist das Bearbeitungswerkzeug zum zumindest teilweisen Einbringen in den Hohlraum entlang der Längsachse des Zylinders geeignet und an der Führungsvorrichtung führbar sowie drehbar gelagert, um jeden Punkt der Innenfläche des Zylinders zu bearbeiten. Im Fall eines Motorblockes kann somit jeder Punkt der Kolbenlaufbahn bearbeitet werden. Gegebenenfalls werden während der Bearbeitung durch das Bearbeitungswerkzeug Partikel erzeugt, zum Beispiel durch Materialabtrag von der Oberfläche.

Das Bearbeitungswerkzeug ist zur Oberflächenbearbeitung geeignet, insbesondere zum Oberflächenstrukturieren bzw. -aufrauen. Dies kann beispielsweise auf Basis eines Lasers erfolgen, auch als Vorbereitung für einen anschließenden Beschichtungsprozess.

Das einzuleitende Spülgas kann unter Überdruck stehen und beispielsweise Stickstoff sein. Auch andere Gase sind denkbar, zum Beispiel andere inerte Gase. Alternativ ist auch Luft als Spülgas einsetzbar. Das Spülgas kann durch das Innere des Bearbeitungswerkzeugs in den Hohlraum eingebracht werden. Alternativ kann das Spülgas an anderer Stelle und/ oder mit einer eigenen Spülgaslanze in den Hohlraum eingebracht werden. Im Falle einer Bearbeitung auf der Basis von Laserstrahlen kann im Bearbeitungswerkzeug, insbesondere an dessen in den Hohlraum einfahrbarem Ende, ein Reflektor zum Umlenken des Laserstrahls angeordnet sein. Damit kann dieser aus dem Bearbeitungswerkzeug hinaus auf die Oberfläche des Hohlraums geleitet werden. Das Spülgas kann hierbei den Reflektor vor Verunreinigungen durch abgetragenes Material schützen. In alternativer Ausgestaltung ist zum Schutz des Reflektors ein Schutzglas eingesetzt.

Nach Bearbeitung einer Innenfläche und Herausfahren des Bearbeitungswerkzeugs aus dem Hohlraum kann eine seitliche Bewegung des Bearbeitungswerkzeugs und der Absauganlage erfolgen, um die Zylinderinnenfläche eines weiteren Zylinders anzufahren und anschließend zu bearbeiten. Zu diesem Zweck können Bearbeitungswerkzeug und Absauganlage insbesondere quer zur Längsachse des Zylinders, also beispielsweise seitlich, beweglich ausgeführt sein. Mehrere Zylinder sind somit anfahrbar, das heißt, es können beispielsweise mehrere Zylinder eines Motorblockes oder mehrere Motorblöcke nacheinander mit dem erfindungsgemäßen Verfahren bearbeitet werden.

Ein wesentlicher Vorteil des erfindungsgemäßen Verfahrens ist, dass eine deutliche Verringerung des Absaugvolumenstroms erreichbar ist. Damit sinken die zu fördernde und zu filternde Luftmenge und damit die Kosten, und es steigt die Effizienz des Verfahrens. Die Unterdruckquelle und der Abluftfilter können wesentlich kleiner dimensioniert werden, was Investitionskosten einspart. Durch geringere Energieverbräuche werden Betriebskosten eingespart. Im Vergleich zu Verfahren, bei denen die abgetragenen Partikel durch den Kurbelwellenraum abgesaugt werden, besteht außerdem weniger Verschmutzungsgefahr, da die Partikel direkt durch den Zylinder abgesaugt werden nicht in den Kurbelwellenraum gelangen können.

In einer Ausgestaltung des Verfahrens ist das Bearbeitungswerkzeug im Wesentlichen hohlstabförmig und das Spülgas wird am im Hohlraum befindlichen Ende des Bearbeitungswerkzeugs durch einen dortigen Auslass in den Hohlraum geleitet.

Mit anderen Worten ist das Bearbeitungswerkzeug dazu ausgestaltet, an eine Gasquelle angeschlossen zu werden, sodass ein Spülgasstrom durch das Innere des Bearbeitungswerkzeugs in Richtung des zu bearbeitenden Bauteils realisiert werden kann. Das Bearbeitungswerkzeug ist im Wesentlichen und vorzugsweise genau hohlstabförmig.

Das Spülgas tritt durch einen Auslass aus dem Hohlstab in den Hohlraum ein. Dieser kann im Falle eines lasergestützten Bearbeitungsverfahrens beispielsweise die Öffnung sein, zu der auch der Laserstrahl austritt. Es kann alternativ ein separater Auslass sein, oder es werden mehrere Auslässe angeordnet. Der Spülgasstrom kann für die Reinigung des Reflektors, zum Schutz vor Verschmutzungen sowie zum Transport der abgetragenen Partikel ausgestaltet sein.

Typischerweise hat das im Wesentlichen hohlstabförmige Bearbeitungswerkzeug eine Längserstreckung, die seine Quererstreckung, im Falle eines kreisförmigen Stabes also seinen Durchmesser, deutlich übersteigt, sodass es eine längliche Grundform hat und in einen typischerweise länglichen Zylinder eingefahren werden kann. Die Längserstreckung des Bearbeitungswerkzeugs ist dabei beispielsweise um den Faktor 1,5 bis 10 größer als der Durchmesser des Bearbeitungswerkzeugs, insbesondere um den Faktor 2 bis 5.

An der dem Hohlraum gegenüberliegenden Seite des Bearbeitungswerkzeugs ist dieses insbesondere an der Führungsvorrichtung befestigt, die ein geführtes Einfahren des Bearbeitungswerkzeugs in den Hohlraum, beispielsweise einen Zylinder, ermöglicht.

Der Vorteil dieser Ausgestaltung ist, dass die Zufuhr von Spülgas und die Einrichtung zur Bearbeitung, beispielsweise mittels Laserstrahl, in einem Werkzeug realisiert werden.

In einer weiteren Ausgestaltung des Verfahrens wird die Absauganlage abdichtend an einer Seite des Hohlraums an dessen Öffnung angeschlossen.

Insbesondere ist die Absauganlage dabei unmittelbar angeschlossen. Selbstverständlich ist dabei die Anordnung von dichtenden Elementen, beispielsweise einer Dichtung, möglich. Die Absauganlage ist hierbei geeignet zum Anlegen eines Unterdrucks und zum Ansaugen von Partikeln. Diese können fest und/oder flüssig sein, weiterhin können Gase bzw. Gasgemische angesaugt werden. Dies wird beispielsweise durch Anordnung eines Schlauchs oder Rohres mit Verbindung zu einer Unterdruckquelle realisiert. Insbesondere wird im gesamten Zylinder ein Gas- bzw. Gasgemischstrom realisiert, der abgetragene Partikel mit sich trägt.

Die Absauganlage kann beispielsweise in Form einer Absaugmanschette ausgeführt sein, die auf die jeweilige Öffnung des Hohlraums aufgelegt wird und um die Öffnung herum abdichtet, sodass bei Anlegen eines Unterdrucks ausschließlich Gase bzw. Gasgemische, eventuell umfassend Flüssigkeits- und/oder Feststoffpartikel, die in dem Hohlraum vorliegen, abgesaugt werden. Die Form der Absaugmanschette kann dabei der Form der Öffnung angepasst sein. Bei kreiszylinderförmigen Hohlräumen wie Zylindern von Motoren ist beispielsweise eine runde Grundform der Manschette möglich.

Die Absaugmanschette kann zum Beispiel aus Kunststoff bestehen oder aus Gummi oder Blech ausgeführt werden. Sie kann zum Beispiel gummielastisch sein, oder steif. Sie kann eine Dichtung aufweisen, um eine Abdichtung gegenüber dem zu bearbeitenden Körper herzustellen. Sie kann mit einem Anpressdruck zur Herstellung einer dichten Verbindung angepresst werden oder beispielsweise durch ihre Gewichtskraft die dichte Verbindung herstellen. Es kann beispielsweise eine Verformung der Absaugmanschette auftreten und/oder eine darin befindliche Dichtung an den Körper gedrückt werden, die dabei eine Verformung erfährt. Insbesondere ist die Absauganlage zu diesem Zweck beweglich ausgestaltet und beispielsweise an der Führungsvorrichtung des Bearbeitungswerkzeugs angeordnet. In diesem Fall findet keine Relativbewegung zur Führungsvorrichtung statt, und das Bearbeitungswerkzeug kann unabhängig von der Absauganlage in den Zylinder hineingefahren werden. Dabei kann beispielsweise vor Einfahren des Bearbeitungswerkzeugs in den Zylinder eine Bewegung zur Positionierung der Führungsvorrichtung, umfassend die Absauganlage, an das Werkstück realisiert werden, um die dichtende Verbindung herzustellen.

Mit anderen Worten bewegt sich die Absauganlage nicht mit dem Bearbeitungswerkzeug, sondern bleibt ortsfest am Werkstück angedrückt, beispielsweise am Motorblock, während das Bearbeitungswerkzeug zur Bearbeitung eine Relativbewegung zum Motorblock ausführt.

Typischerweise führt dabei das Bearbeitungswerkzeug eine Relativbewegung auch zur dem Werkstück gegenüberliegenden Seite der Absauganlage durch. Beispielsweise kann das Bearbeitungswerkzeug durch die Absauganlage hindurch verlaufen. Hier ist insbesondere ein dichtendes Element, beispielsweise eine Gummidichtung, angeordnet, um trotz der Relativbewegung eine im Wesentlichen und vorzugsweise vollständig gasdichte Dichtung herzustellen.

Bei Anwendung des Verfahrens an einem Motorblock wird die Absaugvorrichtung an dessen Oberseite, auch Topdeck genannt, angelegt und gegebenenfalls angedrückt, bevor die Bearbeitung der Zylinderlaufbahn erfolgt.

Das Spülgas wird insbesondere an der Öffnung des Hohlraums abgezogen, zu der es zuvor, durch den Innenraum des Bearbeitungswerkzeugs, eingeleitet wurde.

Der Vorteil dieser Ausgestaltung ist, dass gezielt ein Zylinder bearbeitet und abgesaugt werden kann. Das Bearbeitungswerkzeug sowie die Absauganlage können anschließend zum nächsten zu bearbeitenden Zylinder gefahren werden.

In einer Ausgestaltung des Verfahrens wird die Oberflächenbearbeitung mit einem Laserstrahl vorgenommen, wobei der Laserstrahl aus dem Bearbeitungswerkzeug durch den Auslass des Bearbeitungswerkzeugs austritt, durch auch das Spülgas austritt.

Die Oberflächenbearbeitung kann hierbei beispielsweise als Vorbereitung für eine thermische Beschichtung dienen. Insbesondere wird mittels des Lasers Material abgetragen, wobei abgetragenes Material in Form von Feststoffpartikeln, Flüssigkeitströpfchen und/oder als Gas anfällt. Material kann während des Abtrags beispielsweise verflüssigt, verdampft und/oder sublimiert werden. Dieses abgetragene Material kann durch die Absauganlage abgesaugt werden.

In einer weiteren Ausgestaltung saugt die Absauganlage ein Gas oder ein Gasgemisch, insbesondere Umgebungsluft gemischt mit Spülgas, aus dem Hohlraum ab, sodass an der Stelle der Oberflächenbearbeitung ein Gas- bzw. Gasgemischstrom realisiert wird.

Dadurch wird ein Trägerstrom realisiert, welcher geeignet ist, abgetragenes Material mitzureißen und vom Ort des Abtrags abzutransportieren. Dafür wird Umgebungsluft von einem Punkt angesagt, der strömungstechnisch vor der der Stelle des Materialabtrags liegt. Beispielsweise wird dafür Umgebungsluft durch eine der Absauganlage gegenüberliegende Öffnung des Hohlraums in diesen eingezogen.

Insbesondere kann bei einem Motorblock Umgebungsluft durch wenigstens einen weiteren Zylinder und den Kurbelwellenraum zur Stelle des Materialabtrags gesaugt werden. Zu diesem Zweck wird der Motorblock zur Durchführung des Verfahrens an seiner Unterseite fixiert und abgedichtet, beispielsweise durch Abdichtungsbleche oder Gummielemente. Alternativ kann auch Luft nur durch den Kurbelwellenraum angesaugt werden.

Der Vorteil dieser Ausgestaltung ist, dass neben dem eingetragenen Spülgas ein weiterer Gas- bzw. Gasgemischstrom realisiert wird, um die abgetragenen Partikel abzutransportieren. Damit kann der Spülgasstrom minimal ausgestaltet werden, so dass er in erster Linie die Funktion zum Reinigen des Reflektors erfüllen kann, und die frei verfügbare Umgebungsluft wird zum Transport der Partikel genutzt.

Ein weiterer Aspekt der Erfindung ist ein Verfahren zur Herstellung eines Motorblockes eines Verbrennungsmotors, bei dem das erfindungsgemäße Verfahren zur Oberflächenbearbeitung ausgeführt wird und danach eine Oberflächenbeschichtung vorgenommen wird.

Insbesondere kann eine thermische Beschichtung erfolgen, zum Beispiel eine atmosphärische Plasmabeschichtung.

Es können mit dem erfindungsgemäßen Verfahren verschiedene Arten von Verbrennungsmotoren, wie beispielsweise Reihenmotoren, V-Motoren oder W-Motoren hergestellt werden

Die Erfindung wird im Folgenden anhand der in den beiliegenden Zeichnungen dargestellten Ausführungsbeispiele erläutert.

Es zeigen
Fig. 1: einen Schnitt durch eine erfindungsgemäße Vorrichtung zur Oberflächenbearbeitung,
Fig. 2: einen Schnitt durch eine erfindungsgemäße Vorrichtung zur Oberflächenbearbeitung, teilweise eingeführt in ein Zylinderkurbelgehäuse,
Fig. 3: einen Schnitt durch eine erfindungsgemäße Vorrichtung zur Oberflächenbearbeitung vor der Durchführung des erfindungsgemäßen Verfahrens,
Fig. 4: einen Schnitt durch eine erfindungsgemäße Vorrichtung zur Oberflächenbearbeitung während der Durchführung des erfindungsgemäßen Verfahrens, sowie
Fig. 5: eine perspektivische Ansicht einer erfindungsgemäßen Vorrichtung zur Oberflächenbearbeitung.

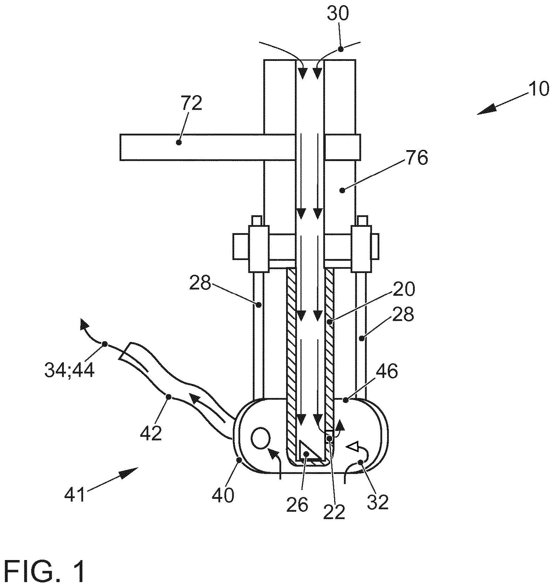

Figur 1 zeigt einen Schnitt durch eine erfindungsgemäße Vorrichtung zur Oberflächenbearbeitung 10. Diese umfasst ein Bearbeitungswerkzeug 20, auch als Innenbearbeitungskopf bezeichnet, welches in Form eines Hohlstabs ausgeführt ist. Das Bearbeitungswerkzeug 20 ist mittels einer Führungsvorrichtung 28 vertikal führbar, um es in einen Hohlraum, beispielsweise in einen Zylinder 54 eines Motorblockes, einzuführen. Im Inneren des Bearbeitungswerkzeugs 20 ist ein entlang der Längsachse des Bearbeitungswerkzeugs 20 ausgerichteter Spülgasstrom realisiert, welcher von oben nach unten in Richtung der Seite des Bearbeitungswerkzeugs 20, die in den Zylinder eingefahren werden kann, verläuft. Am unteren Ende des Bearbeitungswerkzeugs 20 ist ein Reflektor 26, auch als Umlenkprisma bezeichnet, angeordnet, welcher geeignet ist, einen Laserstrahl, der ebenfalls von oben nach unten durch das Bearbeitungswerkzeug 20 geleitet wird, zu reflektieren und ihn durch den Auslass an die Oberfläche der Kolbenlaufbahn 52 im Inneren des Zylinders 54 (hier nicht dargestellt) zu leiten. Zum Austritt sowohl des Laserstrahls 24 (hier nicht dargestellt) als auch des Spülgases 30 ist am endseitigen Bereich des Bearbeitungswerkzeugs 20 ein seitlicher Auslass 22 angeordnet.

Dieser Auslass 22 ist derart positioniert, dass er sich entlang der Längsrichtung eines in die das Bearbeitungswerkzeug geleiteten Laserstrahls zwischen dem Reflektor 26 und einer diesem gegenüberliegend angeordneten Absaugmanschette 40 befindet, so dass ein von dem Reflektor 26 reflektierter Laserstrahl mit einer Richtungskomponente in Richtung auf die Absaugmanschette 40 verläuft. Das heißt, dass bei senkrechter Anordnung des Bearbeitungswerkzeuges 20 der von dem Reflektor 26 reflektierte Laserstrahl schräg wie in den Figuren dargestellt nach oben verläuft und durch einen dortigen Auslass 22 aus dem Bearbeitungswerkzeug 20 austreten kann. Derart wird einer Verschmutzung des Reflektors 26 durch am Arbeitspunkt des Laserstrahls auftretende Dämpfe und/ oder Partikel vorgebeugt.

In einer alternativen, hier nicht gezeigten Ausgestaltung können der Reflektor 26 und der Auslass 22 derart angeordnet und ausgestaltet sein, dass der reflektierte Laserstrahl schräg nach unten abgelenkt wird.

An seinem oberen Ende ist das Bearbeitungswerkzeug 20 mittels Flanschverbindungen an eine Hohlwelle 76 angeschlossen, die mit einem Riemenantrieb 72 in Rotationsbewegung versetzt werden kann. Damit rotiert das gesamte Bearbeitungswerkzeug 20 um seine Längsachse, und es können alle Punkte auf der Kolbenlaufbahn 52 des Zylinders 54 zur Bearbeitung erreicht werden.

Am unteren Ende der Führungsvorrichtung 28 ist eine Absaugmanschette 40 einer Absauganlage 41 angeordnet, die an der Führungsvorrichtung 28 fixiert ist. Durch die Oberseite der Absaugmanschette 40 verläuft das Bearbeitungswerkzeug 20. Bei einer vertikalen Bewegung des Bearbeitungswerkzeugs 20 bleibt die Absaugmanschette 40 ortsfest. Zwischen Absaugmanschette 40 und Bearbeitungswerkzeug 20 ist zu diesem Zweck eine Abdichtung 46 angeordnet, die auch bei der Relativbewegung der beiden Elemente eine im Wesentlichen und insbesondere vollständig gasdichte Verbindung ermöglicht. An der Absaugmanschette 40 ist ein Absaugschlauch 42 angeordnet, an den eine Unterdruckerzeugungseinrichtung 44, beispielsweise eine Vakuumpumpe, angeschlossen werden kann. Diese ist in der Lage, einen Gas- bzw. Gasgemischstrom 34 zu erzeugen, der das Spülgas 30, eventuell abgetragene Partikel sowie eventuell Umgebungsluft 32, im unteren Bildbereich dargestellt, umfassen kann. Die Unterseite der Absaugmanschette 40 ist gerade ausgeführt und dazu geeignet, auf die Oberseite, auch Topdeck genannt, eines Zylinderkurbelgehäuses aufgesetzt zu werden.

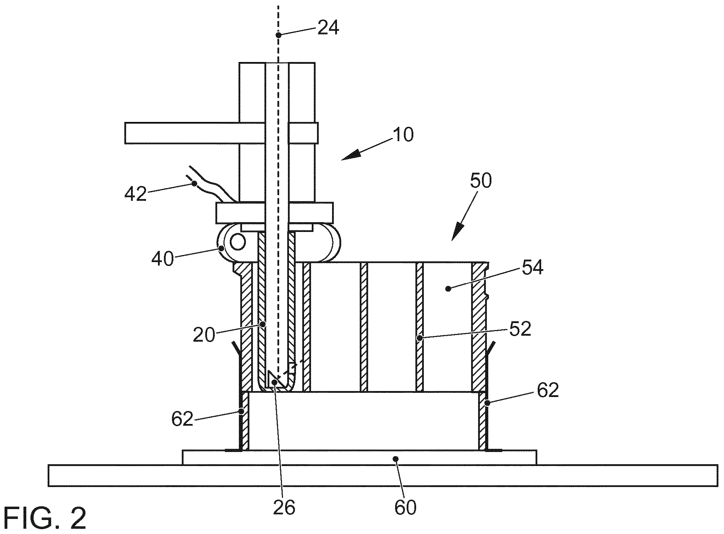

Figur 2 zeigt einen Schnitt durch eine erfindungsgemäße Vorrichtung zur Oberflächenbearbeitung 10, welche teilweise in ein Zylinderkurbelgehäuse, also einen Verbrennungsmotorblock 50, eingeführt ist. In dieser Darstellung ist das Spülgas 30 sowie die Umgebungsluft 32 aus Gründen der Übersichtlichkeit nicht dargestellt.

Der Laserstrahl 24 verläuft senkrecht von oben nach unten durch die Längsachse des Bearbeitungswerkzeugs 20 und wird durch den unten angeordneten Reflektor 26 durch den seitlichen Auslass 22 am Ende des Bearbeitungswerkzeugs 20 auf die Innenfläche der Kolbenlaufbahn 52 des Verbrennungsmotorblockes 50 geleitet. In der dargestellten Figur ist das Bearbeitungswerkzeug 20 hierbei vollständig in den Zylinder 54 eingefahren. Die Absaugmanschette 40, hier aus flexiblem Material ausgeführt, ist etwas zusammengedrückt, um eine Dichtwirkung mit der Oberfläche des Verbrennungsmotorblockes 50 zu erzielen. Der Verbrennungsmotorblock 50 ist auf einer Auflage 60 fixiert und mittels außenliegender Abdichtungsbleche 62 abgedichtet. Somit wird verhindert, dass beispielsweise durch den Kurbelwellenraum Umgebungsluft eindringt. An der Absaugmanschette 40 ist ein Absaugschlauch 42 angeordnet, an den eine Unterdruckerzeugungseinrichtung 44 angeordnet werden kann.

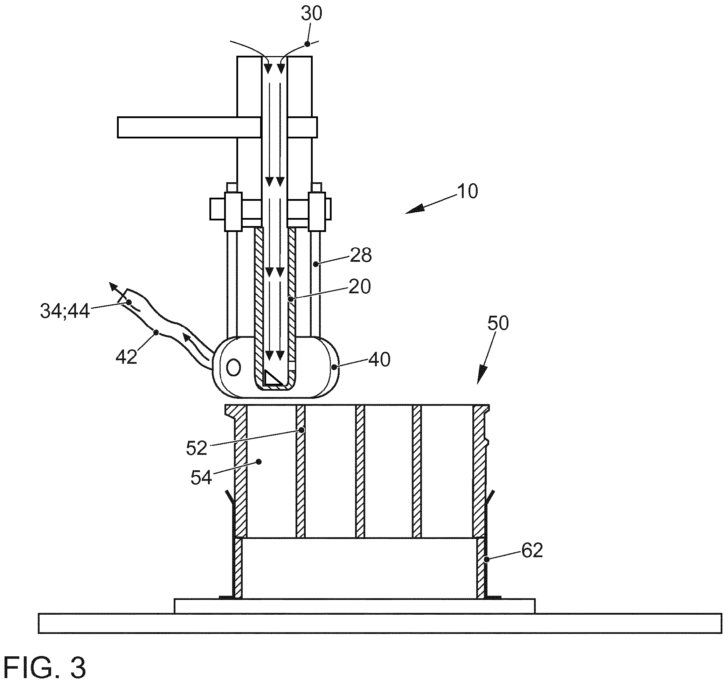

Figur 3 zeigt einen Schnitt durch eine erfindungsgemäße Vorrichtung zur Oberflächenbearbeitung vor der Durchführung des erfindungsgemäßen Verfahrens. Der Spülgasstrom verläuft in senkrechter Richtung durch das Bearbeitungswerkzeug 20 und tritt an dessen seitlichem Auslass 22 aus. Die Unterdruckerzeugungseinrichtung 44 erzeugt einen Gas- bzw. Gasgemischstrom 34, der das Spülgas sowie Umgebungsluft 32 umfasst. Auch hier ist der Verbrennungsmotorblock 50 fixiert und mittels außenliegender Abdichtungsbleche 62 abgedichtet.

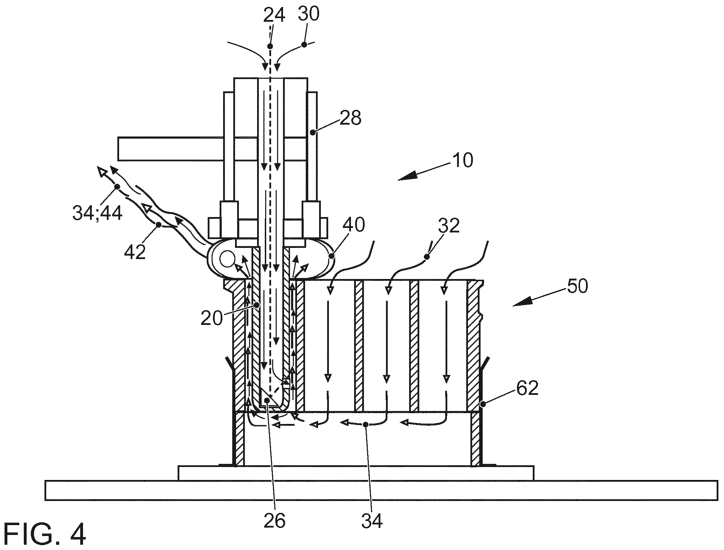

Figur 4 zeigt einen Schnitt durch eine erfindungsgemäße Vorrichtung zur Oberflächenbearbeitung während der Durchführung des erfindungsgemäßen Verfahrens. In diesem nächsten Schritt ist das Bearbeitungswerkzeug 20 nun vollständig in den Zylinder 54 des Verbrennungsmotorblockes 50 eingefahren. Der Laserstrahl 24, der durch den Reflektor 26 eine Richtungsänderung erfährt, verlässt das Bearbeitungswerkzeug 20 durch dessen am Ende angeordneten Auslass 22 und bearbeitet die Kolbenlaufbahn 52 des Zylinders 54. Gleichzeitig wird ein Spülgas 30, beispielsweise Stickstoff, durch das Bearbeitungswerkzeug 20 und den Auslass 22 in den Zylinder 54 des Verbrennungsmotorblockes 50 eingeleitet. Der realisierte Spülgasstrom schützt einerseits den Reflektor 26 vor Verunreinigung, indem eventuell angelagerte Partikel weggeblasen werden. Zum anderen wird durch die Unterdruckerzeugungseinrichtung 44 ein der Gas- bzw. Gasgemischstrom 34 realisiert, umfassend Umgebungsluft 32, welche durch die freiliegenden Zylinder 54 und/oder den Kurbelwellenraum eingesaugt wird und im Bereich des Materialabtrags eine ausreichende Geschwindigkeit aufweist, um abgetragene Partikel mitzureißen und in der Schwebe zu halten, um sie abzutransportieren. Durch den Absaugschlauch 42 wird der Gas- bzw. Gasgemischstrom 34, umfassend Umgebungsluft und Spülgas 30, zur Unterdruckerzeugungseinrichtung 44 gesaugt.

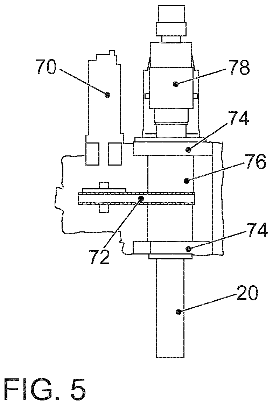

Figur 5 zeigt eine perspektivische Ansicht einer erfindungsgemäßen Vorrichtung zur Oberflächenbearbeitung 10. Diese umfasst an ihrem unteren Ende ein Bearbeitungswerkzeug, welches mittels Flanschverbindung an eine Hohlwelle 76 angeschlossen ist. Diese ist mit zwei Lagern 74 rotatorisch gelagert und kann über einen Riemenantrieb 72 mit dem Motor 70 in Rotationsbewegung versetzt werden. Damit rotiert auch der Auslass 22 (hier nicht dargestellt) am Ende des Bearbeitungswerkzeugs 20 und jeder Punkt der Kolbenlaufbahn 52 kann erreicht werden. Oberhalb der Hohlwelle 76 sind optische Einrichtungen, beispielsweise, wie hier dargestellt, ein Kollimator 78, angeordnet.

## Patentansprüche

1. Vorrichtung zur Oberflächenbearbeitung eines Hohlraums, umfassend ein im Wesentlichen hohlstabförmiges Bearbeitungswerkzeug (20) mit einem Reflektor (26) sowie eine Laserstrahlquelle und eine Absauganlage (41), die dichtend an einer Öffnung eines Hohlraums, insbesondere eines Zylinders (54) eines Verbrennungsmotorblockes (50), ansetzbar ist, wobei die Vorrichtung derart eingerichtet ist, dass das Spülgas (30) an der Öffnung des Hohlraums abziehbar ist, zu der es zuvor, durch den Innenraum des Bearbeitungswerkzeugs (20), eingeleitet wurde.

2. Vorrichtung zur Oberflächenbearbeitung eines Hohlraums nach Anspruch 1, **dadurch gekennzeichnet, dass** die Absauganlage (41) eine Unterdruckerzeugungseinrichtung (44) aufweist.

3. Vorrichtung zur Oberflächenbearbeitung eines Hohlraums nach wenigstens einem der Ansprüche 1 und 2, **dadurch gekennzeichnet, dass** die Absauganlage (41) ein flexibles Element, insbesondere eine Absaugmanschette (40), aufweist, das geeignet ist, eine Dichtungswirkung zu einer Oberfläche des den Hohlraum ausbildenden Materials, in dem die Öffnung ausgebildet ist, herzustellen.

4. Verfahren zur Oberflächenbearbeitung eines Hohlraumes, insbesondere einer Kolbenlaufbahn (52) eines Zylinders (54) eines Verbrennungsmotorblockes (50), bei dem:
- der Hohlraum bereitgestellt wird,
- eine Vorrichtung zur Oberflächenbearbeitung eines Hohlraums gemäß einem der Ansprüche 1 bis 3 zur Verfügung gestellt wird,
- ein Bearbeitungswerkzeug (20) der Vorrichtung in den Hohlraum eingefahren wird und mit dem Bearbeitungswerkzeug (20) die Oberfläche des Hohlraumes bearbeitet wird,
- ein Spülgas (30) in den Hohlraum eingeleitet wird und an einer Öffnung des Hohlraumes an diesen eine Absauganlage (41) der Vorrichtung angeschlossen wird, um Spülgas (30) sowie bei der Bearbeitung gegebenenfalls entstandene Partikel abzusaugen,
wobei das Spülgas (30) an der Öffnung des Hohlraums abgezogen wird, zu der es zuvor, durch den Innenraum des Bearbeitungswerkzeugs (20), eingeleitet wurde.

5. Verfahren zur Oberflächenbearbeitung nach Anspruch 4, **dadurch gekennzeichnet, dass** das Bearbeitungswerkzeug (20) im Wesentlichen hohlstabförmig ist und das Spülgas (30) am im Hohlraum befindlichen Ende des Bearbeitungswerkzeugs (20) durch einen dortigen Auslass (22) in den Hohlraum geleitet wird.

6. Verfahren zur Oberflächenbearbeitung nach wenigstens einem der Ansprüche 4 und 5, **dadurch gekennzeichnet, dass** die Absauganlage (41) abdichtend an einer Seite des Hohlraums an die Öffnung angeschlossen wird.

7. Verfahren zur Oberflächenbearbeitung nach wenigstens einem der Ansprüche 4 bis 6, **dadurch gekennzeichnet, dass** die Oberflächenbearbeitung mit einem Laserstrahl (24) vorgenommen wird, wobei der Laserstrahl (24) aus dem Bearbeitungswerkzeug (20) durch den Auslass (22) des Bearbeitungswerkzeugs (20) austritt, durch den auch das Spülgas (30) austritt.

8. Verfahren zur Oberflächenbearbeitung nach wenigstens einem der Ansprüche 4 bis 7, **dadurch gekennzeichnet, dass** die Absauganlage (41) ein Gas oder ein Gasgemisch, insbesondere Umgebungsluft, aus dem Hohlraum absaugt, so dass an der Stelle der Oberflächenbearbeitung ein Gas- beziehungsweise Gasgemischstrom (34) realisiert wird.

9. Verfahren zur Herstellung eines Motorblockes eines Verbrennungsmotors (70), bei dem das Verfahren gemäß wenigstens einem der Ansprüche 4 bis 8 ausgeführt wird und danach eine Oberflächenbeschichtung vorgenommen wird.

## Claims

1. Device for surface treatment of a cavity, comprising a substantially hollow-rod-shaped machining tool (20) with a reflector (26) as well as a laser beam source and an extraction system (41) which can be applied in a sealing manner to an opening of a cavity, in particular a cylinder (54) of an internal combustion engine block (50), wherein the device is designed in such a way that the purge gas (30) can be removed at the opening of the cavity at which it was previously introduced through the interior of the machining tool (20).

2. Device for surface treatment of a cavity according to claim 1, **characterized in that** the extraction system (41) has a negative-pressure generating means (44).

3. Device for surface treatment of a cavity according to at least one of claims 1 and 2, **characterized in that** the extraction system (41) has a flexible element, in particular an extraction sleeve (40), which is suitable for producing a sealing effect with respect to a surface of the material forming the cavity, in which the opening is formed.

4. Method for surface treatment of a cavity, in particular a piston path (52) of a cylinder (54) of an internal combustion engine block (50), in which:
- the cavity is provided,
- a device for surface treatment of a cavity according to one of claims 1 to 3 is provided,
- a machining tool (20) of the device is inserted into the cavity and the surface of the cavity is machined with the machining tool (20),
- a purge gas (30) is introduced into the cavity and an extraction system (41) of the device is connected to an opening of the cavity in order to extract purge gas (30) and any particles that may have been produced during the machining,
wherein the purge gas (30) is removed at the opening of the cavity at which it was previously introduced through the interior of the machining tool (20).

5. Method for surface treatment according to claim 4, **characterized in that** the machining tool (20) is substantially hollow-rod-shaped and the purge gas (30) is guided into the cavity through an outlet (22) at the end of the machining tool (20) located in the cavity.

6. Method for surface treatment according to at least one of claims 4 and 5, **characterized in that** the extraction system (41) is connected to the opening in a sealing manner on one side of the cavity.

7. Method for surface treatment according to at least one of claims 4 to 6, **characterized in that** the surface treatment is carried out with a laser beam (24), wherein the laser beam (24) exits the machining tool (20) through the outlet (22) of the machining tool (20) through which the purge gas (30) also exits.

8. Method for surface treatment according to at least one of claims 4 to 7, **characterized in that** the extraction system (41) extracts a gas or a gas mixture, in particular ambient air, from the cavity, so that a gas or gas mixture stream (34) is realized at the point of surface treatment.

9. Method for producing an engine block of an internal combustion engine (70), in which the method according to at least one of claims 4 to 8 is carried out and a surface coating is then implemented.

## Revendications

1. Dispositif pour l'usinage de surfaces d'une cavité, comprenant un outil d'usinage (20) sensiblement en forme de barre creuse comportant un réflecteur (26) ainsi qu'une source de faisceau laser et un système d'aspiration (41) qui peut être placé de manière étanche sur une ouverture d'une cavité, en particulier d'un cylindre (54) d'un bloc-moteur à combustion interne (50), dans lequel le dispositif est conçu de telle sorte que le gaz de balayage (30) peut être extrait au niveau de l'ouverture de la cavité vers laquelle il a été introduit auparavant par l'espace intérieur de l'outil d'usinage (20).

2. Dispositif pour l'usinage de surfaces d'une cavité selon la revendication 1, **caractérisé en ce que** le système d'aspiration (41) présente un appareil de génération de dépression (44).

3. Dispositif pour l'usinage de surfaces d'une cavité selon au moins l'une des revendications 1 et 2, **caractérisé en ce que** le système d'aspiration (41) présente un élément flexible, en particulier une manchette d'aspiration (40), qui est apte à former un effet d'étanchéité par rapport à une surface du matériau formant la cavité dans laquelle est formée l'ouverture.

4. Procédé pour l'usinage de surfaces d'une cavité, en particulier d'une glissière de piston (52) d'un cylindre (54) d'un bloc-moteur à combustion interne (50), dans lequel :
- la cavité est fournie,
- un dispositif pour l'usinage de surfaces d'une cavité selon l'une des revendications 1 à 3 est mis à disposition,
- un outil d'usinage (20) du dispositif est introduit dans la cavité et la surface de la cavité est usinée avec l'outil d'usinage (20),
- un gaz de balayage (30) est introduit dans la cavité et un système d'aspiration (41) du dispositif est relié à celle-ci au niveau d'une ouverture de la cavité afin d'aspirer le gaz de balayage (30) ainsi que des particules qui surviennent éventuellement lors de l'usinage,
dans lequel le gaz de balayage (30) est extrait au niveau de l'ouverture de la cavité vers laquelle il a été introduit précédemment par l'espace intérieur de l'outil d'usinage (20).

5. Procédé pour l'usinage de surfaces selon la revendication 4,
**caractérisé en ce que** l'outil d'usinage (20) est sensiblement en forme de barre creuse et le gaz de balayage (30) est dirigé dans la cavité, au niveau de l'extrémité de l'outil d'usinage (20) se trouvant dans la cavité, par une sortie (22) locale.

6. Procédé pour l'usinage de surfaces selon au moins l'une des revendications 4 et 5, **caractérisé en ce que** le système d'aspiration (41) est relié de manière étanche à l'ouverture au niveau d'un côté de la cavité.

7. Procédé pour l'usinage de surfaces selon au moins l'une des revendications 4 à 6, **caractérisé en ce que** l'usinage de surfaces est effectué avec un faisceau laser (24), dans lequel le faisceau laser (24) s'échappe de l'outil d'usinage (20) par la sortie (22) de l'outil d'usinage (20) par laquelle s'échappe également le gaz de balayage (30).

8. Procédé pour l'usinage de surfaces selon au moins l'une des revendications 4 à 7, **caractérisé en ce que** le système d'aspiration (41) aspire un gaz ou un mélange de gaz, en particulier de l'air environnant, hors de la cavité, de sorte qu'un courant de gaz ou de mélange de gaz (34) est réalisé à l'endroit de l'usinage de surfaces.

9. Procédé de fabrication d'un bloc-moteur d'un moteur à combustion interne (70), dans lequel le procédé selon au moins l'une des revendications 4 à 8 est mis en oeuvre, puis un usinage de surfaces est effectué.
